# EUROPÄISCHE PATENTSCHRIFT

(11) **EP 1 064 543 B1**
(45) Veröffentlichungstag und Bekanntmachung des Hinweises auf die Patenterteilung: **04.06.2003**
(21) Anmeldenummer: 99915513.8
(22) Anmeldetag: 12.03.1999
(51) Int. Cl.: G01N 30/95, G01N 21/59

(54) **DÜNNSCHICHTCHROMATOGRAPHIEGERÄT**
THIN-LAYER CHROMATOGRAPHY APPARATUS
APPAREIL DE CHROMATOGRAPHIE EN COUCHE MINCE

(30) Priorität: 14.03.1998 DE 19811150
(43) Veröffentlichungstag der Anmeldung: 03.01.2001
(73) Patentinhaber: Spangenberg, Bernd, 77654 Offenburg (DE)
(72) Erfinder: SPANGENBERG, Bernd, D-77654 Offenburg (DE); KLEIN, Karl-Friedrich, D-61169 Friedberg (DE)
(74) Vertreter: Pietruk, Claus Peter, Dipl.-Phys.
(86) Internationale Anmeldenummer: DE9900693
(87) Internationale Veröffentlichungsnummer: WO99047914

(56) Entgegenhaltungen:
- EP-A- 0 457 526
- DE-A- 2 047 952
- DE-A- 3 247 355
- DE-A- 4 433 305
- DE-C- 4 133 131
- FR-A- 2 661 986
- PATENT ABSTRACTS OF JAPAN vol. 095, no. 003, 28. April 1995 (1995-04-28) & JP 06 333125 A (FURUKAWA ELECTRIC CO LTD:THE), 2. Dezember 1994 (1994-12-02)
- VOVK I ET AL: "Quantitative evaluation of chromatograms from totally illuminated thin-layer chromatographic plates" JOURNAL OF CHROMATOGRAPHY A, Bd. 768, Nr. 2, 25. April 1997 (1997-04-25), Seite 329-333 XP004064168 ISSN: 0021-9673

## Beschreibung

Die vorliegende Erfindung betrifft ein Dünnschichtchromatographiegerät nach dem Oberbegriff von Anspruch 1.

Die Dünnschichtchromatographie ist ein verbreitetes Verfahren zur Trennung und Analyse von Stoffgemischen. Dabei wird eine stationäre Phase als dünne Schicht auf einem geeigneten Träger aus Glas, Polyester, Aluminium oder dergleichen vorgesehen. Das zu untersuchende Stoffgemisch wird bei einem Startpunkt oder einer Startlinie auf der stationären Phase aufgebracht. Dann wird die Dünnschichtplatte entwickelt. Dazu wird eine mobile Phase als Laufmittel (Eluens), etwa durch Einstellen der Dünnschichtplatte in eine Trogkammer, an die Startlinie oder den Startpunkt gebracht, von wo die mobile Phase beginnt, insbesondere durch die Kapillarwirkung der stationären Phase über die Dünnschicht zu laufen. Die mobile Phase kann dabei die in ihr gut löslichen Anteile des zu untersuchenden Stoffgemisches über die Dünnschichtplatte mitnehmen. Die weniger gut löslichen Bestandteile bleiben auf der stationären Phase. Zeigen die Einzelkomponenten des aufgetragenen Stoffgemisches aufgrund substanzspezifischer Retentionswerte unterschiedliche Verteilungen zwischen mobiler und stationärer Phase, führt dies zu einer Auftrennung des Stoffgemisches über die Dünnschichtplatte hinweg. Man erhält eine räumliche Verteilung der Komponenten über die Dünnschichtplatte, die substanzspezifisch ist. Die Analyse des Verteilungsmusters, also des Chromatogramms, ermöglicht qualitative und quantitative Aussagen über die Komponenten des Stoffgemisches.

Die erforderliche Analyse der entwickelten Dünnschichtchromatographieplatten erfolgt üblicherweise optisch mit Dünnschichtchromatographiegeräten, in welchen die Dünnschichtplatte mit Licht bestrahlt wird und mit welchen untersucht werden kann, wie das eingestrahlte Licht durch die Dünnschichtplatte verändert wird.

Die vorliegende Erfindung befaßt sich genauer mit einem solchen optischen Dünnschichtchromatographiegerät und es ist nicht relevant, ob auch die eigentliche Auftragung und Entwicklung der Dünnschichtplatte in dem Gerät selbst erfolgt; weiter ist unerheblich, ob der Träger starr oder flexibel aus Glas, Polyester oder dergleichen hergestellt ist, solange er einer optischen Untersuchung des entwickelten Chromatogramms zugänglich ist.

Die optische Bestimmung, welche Stoffe im Chromatogramm vorliegen, kann einerseits auf den Ort gestützt werden, den ein bestimmter Bestandteil des zu untersuchenden Stoffgemisches auf der Dünnschichtplatte bei der Entwicklung erreicht hat, und andererseits auf seine optischen Eigenschaften, d.h. das Absorptionsvermögen des Stoffes, seine Fluoreszenzeigenschaften usw. Eine genaue Untersuchung erfordert somit sowohl eine hohe Ortsauflösung als auch eine genaue spektrale Untersuchung.

Es ist vorgeschlagen worden ("Development of a system for measuring the UV spectra of components separated by TLC" von S. Ebel und W. Windmann in J. Planar Chromatography, 1991, S. 171ff), Licht aus einer Deuteriumlampe über ein faseroptisches Bündel auf eine Dünnschichtplatte zu leiten und von dort einem Photodiodenarraydetektor zuzuleiten. Das faseroptische Bündel besteht aus einer "Y"-Faser, welche verwendet wird, um das UV-Licht der Deuteriumlampe auf die Dünnschichtplatte zu leiten und von dort zu der optischen Untersuchungseinrichtung zu führen.

Messungen mit solchen Systemen werden in einer Vielzahl von Veröffentlichungen beschrieben, z.B. A. N. Diaz und F. Garcia Sanchez in "Fiber optic fluorescence scanning in thin-layer chromatography" in "Instrumentation Science and Technology, 22 (3), 273-281 (1994)"; A. N. Diaz "Fiber-optic remote sensor for in situ fluorimetric quantification in thin-layer chromatography" in Analytica Chimica Acta, 255 (1991) 297-303.

Eine weitere Vorrichtung ist aus "Determination of Reflectance of Pesticide Spots on Thin-Layer Chromatograms Using Fiber Optics" von M. Beroza, K.R. Hill und K.H. Norris in Analytical Chemistry, Bd. 40, 1608-1613 (1968) bekannt. Dort wird vorgeschlagen, eine Dünnschichtplatte mit stochastisch angeordneten Y-Lichtleitern abzutatsten. Der Fuß der Y-Fasern wird zur Dünnschichtplatte, der erste Arm zu einer Lichtquelle und der andere Arm zu einer optischen Untersuchungsvorrichtung geführt. Es ist ein Lesekopf zur Plattenabtastung und ein Kopf zur Referenzmessung auf einer benachbarten freien Bahn erforderlich.

In dem Artikel " A versatile Spectrophotometric Scanner for Large TLC Plates" von B. L. Hamman u. M.L. Martin in Analytical biochemistry Bd. 15, 305-312 (1966) wird vorgeschlagen, in einem lichtdichten Gehäuse einen Plattenscanner unterzubringen, der einen angetriebenen Schlitten umfaßt, mit welchem ein Faserbündel über eine Dünnschichtplatte bewegt wird. Sende- und Empfangslichtleiter sind zur Messung der Transmission aufeinander zuweisend gegenüberliegend am Schlitten angeordnet. Die Lichtfleckgröße kann durch Einschieben von Schlitzen geeigneter Größe vor die Sendelichtleiter bestimmt werden.

Ein Problem bei derartigen Dünnschichtchromatographiegeräten besteht in der ungleichmäßigen Verteilung der Substanzen über die Bereiche, zu welchen sie auf der Dünnschichtplatte bei der Entwicklung getragen wurden. Die Konzentration ist im Zentrum eines Bereiches am höchsten und nimmt zu den Rändern des Flekkes ab.

Eine bekannte Möglichkeit, derartige Fehler. zu vermeiden, besteht darin, einen großen Fleck auszuleuchten. In einer weiteren bekannten Anordnung (S. Bayerbach und G. Gauglitz "Spectral detection in thin-layer chromatography by linear photo diode array spectrometry" in Fresenius Z. Anal. Chem. (1989) 335:370-374) wird daher eine Lichtfleckgröße von ein bis zwei Millimetern abhängig vom Abstand zur Dünnschichtplatte vorgeschlagen. Dies geschieht auch bei Verwendung ungeordneter Faserlichtbündel.

Es wurde weiter vorgeschlagen (S. Ebel, E. Geitz und J. Hocke in "Vollautomatische, rechnergesteuerte Auswertung von Dünnschicht-Chromatogrammen" in GIT Fachz. Lab, 24. Jahrgang., S. 660 ff), den Lichtfleck mäanderförmig über die Substanzflecken auf der Dünnschichtplatte zu führen. Es ist weiter vorgeschlagen worden, die Dünnschichtplatte über einen Exzenter um einen definierten Betrag auszulenken, um die punktförmige Vermessung eines Dünnschichtchromatrogrammfleckes zu vermeiden, vergl. Band 5 "Dünnschicht-Chromatographie" von Ullmanns Encyklopädie der technischen Chemie.

Nachteilig bei den vorbeschriebenen Maßnahmen, mit welchen die ungleichmäßige Substanzverteilung über den Fleck kompensiert werden soll, ist regelmäßig die verringerte Ortsauflösung. Sie führt bei gegebener Stoffmenge zu einer schlechteren Trennleistung bzw. bei begrenzten Stoffmengen zu einer verschlechterten Nachweisempfindlichkeit.

Aus der WO 93/14392 ist eine Analysevorrichtung mit einer polychromatischen Lichtquelle bekannt. Die Lichtquelle kann eine Glühlampenlichtquelle mit einer kleinen Öffnung oder bevorzugt eine Halbleiterlichtquelle, z. B. eine LED umfassen.

Aus der EP 0 060 709 B1 ist ein Verfahren und eine Vorrichtung für die multidimensionale Echtzeitchromatographie bekannt. Das vorbekannte System weist erste Mittel zum chromatographischen Trennen einer Probe um unbekannte Zusammensetzung in eine erste Gruppierung von Bestandteilen auf, wobei es sich bei dem ersten Mittel um eine chromatographische Dünnschichtplatte handeln kann; zweite Mittel zum weiteren Trennen der genannten Bestandteile in eine höherdimensionale zweite Gruppierung von Bestandteilen; dritte Mittel zum Erkennen der genannten Bestandteile. Die dritten Mittel können ein lineares Multiphotodiodenarray sein, welches detektiert, wie eine Lichtquelle das eluierende Lösungsmittel auf der Dünnschichtplatte beleuchtet. Die Beleuchtung kann eine Vielzahl von Lichtquellen verwenden, welche sukzessiv verwendet werden und bei verschiedenen Wellenlängen emittieren, die für die gesuchten unbekannten Bestandteile spezifisch sind. Die Schrift befaßt sich auch mit dem Problem, daß die Analyse durch die Ausbreitung der Flecken nicht sehr genau ist. Das bekannte Verfahren schlägt die Echtzeituntersuchung während der Trennung vor, erlaubt aber daher insbesondere keine nachträgliche Auswertung bereits entwickelter Dünnschichtplatten. Es ist damit nicht möglich, das vorbekannte System zur Untersuchung archivierter Dünnschichtplatten heranzuziehen, wie dies etwa zur Dokumentation von Chargenqualitäten in der pharmazeutischen Industrie erforderlich ist.

Die Dissertation "Remisionsspektren: Möglichkeiten und Grenzen" von W. Windmann (Universität Würzburg, 1991) befaßt sich mit der Verwendung von Lichtleitern in Dünnschichtchromatographiegeräten. Es wird ausgeführt (Seite 144), daß es unbedingt erforderlich sei, hohe Intensitäten des eingestrahlten Lichtes auf der Dünnschichtplatte zu erreichen, um ein ausreichend starkes Remisionssignal zu erhalten, daß andererseits aber die Fleckgröße ausreichend groß sein müsse, damit ein Fleck auf einer Bahn auch noch erkannt wird, wenn die chromatographische Entwicklung Fehler aufweist. Die Verwendung von größeren Faserbündeln, d.h. mit größerer numerischer Apertur, könne diese Probleme nur in engen Grenzen lösen.

Eine Vorrichtung, in welcher eine Vielzahl kohärenter paralleler Lichtstrahlen verwendet wird, um die Position eines Objektes zu bestimmen, ist aus der EP 0 669 515 A3 bekannt. Die bekannte Vorrichtung wird verwendet, um in einem Kanal oder dergl. die Position von Baumstämmen oder anderen langgestreckten Objekten zu bestimmen.

Die vorliegende Erfindung zielt darauf, Neues für die gewerbliche Anwendung bereit zu stellen und insbesondere, jedoch nicht ausschließlich, ein robustes, kompaktes Dünnschichtchromatographiegerät mit hoher spektraler und örtlicher Auflösung bereitzustellen, wobei auch insbesondere allenfalls geringe Störungen durch Umgebungslicht auftreten und welches dennoch preisgünstig herzustellen ist.

Die Lösung des gesetzten Ziels wird unabhängig beansprucht, bevorzugte Ausführungsformen finden sich in den abhängigen Ansprüchen.

Ein Gedanke der Erfindung besteht somit darin, die Lichtleitrer in vorbestimmter geometrischer Ausrichtung anzuordnen.

Damit wird zunächst eine regel-, vorzugsweise gleichmäßige Ausleuchtung bzw. Detektion über die Fleckbreite durch eine Mehrzahl an Lichtleitern erhalten. Es ist so ohne weiteres möglich, eine gewünschte Lichtintensitätsverteilung über den ganzen Substanzfleck zu erreichen. Die Veränderung des eingestrahlten Lichtes durch Absorption und/oder Fluoreszenz kann dann ebenfalls über die ganze Fleckbreite detektiert werden. Das Einschieben von Blenden zur Erzielung einer gewünschten Ausleuchtund Abtastgeometrie ist nicht zwingend erforderlich.

Die geometrische Anordnung der Sende- und Empfangslichtleiter zueinander ermöglicht es, die Überlappung des Lichtfleckes, der von einem Sendelichtleiter abgestrahlt wird, mit dem Sichtfeld, das von den Empfangslichtleitern erfaßt wird, gezielt zu beeinflussen zu wählen und nach Wunsch steuerbar zu machen. Die Regelmäßigkeit der Anordnung, die dadurch bedingt ist, daß Sendeund Empfangslichtleiter auch untereinander geometrisch angeordnet sind, sorgt dafür, daß sich die Überlappungsintegrale verschiedener, einander zugeordneter Sende- und Empfangslichtleiter entsprechen, was auch dann gilt, wenn für bestimmte Zwecke nicht alle überlappungsintegrale exakt identisch miteinander sind, sondern Gruppen einander entsprechender Überlappungsintegrale vorliegen, etwa bei Verwendung von mehreren unterschiedlichen Faserarten. Die Ortsauflösung ist in der vorgeschlagenen Anordnung durch das vergleichsweise kleine Überlappungsintegral bestimmt und nicht durch die Fleckgröße des gesamten ausgeleuchteten Dünnschichtplattenbereiches.

Es ist vorgesehen, dass Sichtfelder der Empfangslichtleiter und Lichtflecken der Sendelichtleiter einstellbar partiell überlappen, wobei der Abstand der Lichtleiter zur Dünnschichtplatte verändert werden kann, was durch piezoelektrische Modulation oder mit mechanischen Mitteln möglich ist.

Bevorzugt sind wenigstens zehn, allgemein jedoch deutlich mehr Sendelichtleiter vorgesehen, welche linear dicht nebeneinander aufgereiht sind. Die Lichtflecken jeweils benachbarter Sendelichtleiter auf der Dünnschichtplatte können nahezu überlappen oder geringfügig beabstandet sein. In diesem Fall empfängt ein Empfangslichtleiter bevorzugt Licht aus wenigstens zwei Sendelichtleitern.

Mit zwei oder mehr parallelen Reihen Sendelichtleiter benachbart zueinander wird eine gegebene Stelle intensiver ausgeleuchtet und durch Ausleuchtung von unterschiedlichen Seiten wird die Winkelverteilung des empfangenen Lichtes gleichmäßiger. Wird in verschiedene Lichtleiter jeweils Licht unterschiedlicher spektraler Intensität eingestrahlt, ergibt sich auf der Dünnschichtplatte ein gewünschtes, etwa nahezu gleichmäßiges Ausleuchtungsspektrum einfach durch Anordnung der jeweiligen Lichtleiter. Die Ausleuchtung mit parallelen Lichtleitern erlaubt es zudem, Licht senkrecht auf die Platte einzustrahlen und das senkrecht zur Platte remittierte Licht zur Auswertung zu sammeln. Dies ist nach dem Lambert 'schen Cosinusgesetz zur Erzielung hoher Lichtintensitäten vorteilhaft.

Die Reihen sind zur Einstellung der Lichtflecken-Überlappung von Sendelichtleitern verschiedener Reihen zueinander beweglich, etwa durch Schwenken und/oder Translation einer Reihe zur anderen hin oder von dieser weg.

Ein einstellbar variabler Abstand der Sendelichtleiter innerhalb einer Reihe ermöglicht Messungen mit unterschiedlichen Überlappungen der Lichtflecken miteinander bzw. mit jeweiligen Sichtfeldern und damit unterschiedliche Ortsauflösungen.

Eingangsseitige Einkopplung von Licht aus unterschiedlichen Lichtquellen in die Sendelichtleiter erleichtert die Realisierung eines gewünschten Ausleuchtungsspektrums. Eine über den verwendeten Spektralbereich etwa gleichmäßige Intensität stellt sicher, daß die in der optischen Untersuchungseinrichtung verwendeten Detektoren nicht durch in engen Spektralbereichen besonders intensive Signale überlastet werden. Ein gewünschtes Ausleuchtspektrum ist auch mit einer einzigen Lichtquelle durch dispersive Elemente zwischen Lichtquelle und Dünnschichtplatte zu erzielen, oder durch unterschiedlich lange Lichtleiter.

Eine refraktive Linse als dispersives Element erhöht zudem die Einkopplungseffizienz in die Sendelichtleiter. Die Einkoppeleffizienz wird auch erhöht, wenn ein eventuell vorhandener Fasermantel auf der Lampenseite entfernt, etwa weggeätzt und die Enden mehrerer Fasern gegebenenfalls verschweißt oder in Kunstharz eingegossen werden. Für eine besonders gleichmäßige Ausleuchtung der Dünnschichtplatte mit über alle Sendelichtleiter zumindest nahezu gleicher Intensität wird zwischen Lichtquelle und Eingangsseite der Sendelichtleiter eine Streuscheibe oder dergleichen angeordnet.

Während es für sich vorteilhaft ist, eine Mehrzahl optischer Sendelichtleiter vorzusehen, ist bevorzugt auch oder wenigstens eine Mehrzahl optischer Empfansglichtleiter wie wenigstens zwanzig, bevorzugt jedoch zwischen 50 und 100 Empfangslichtleiter vorgesehen.

Die Mehrzahl optischer Empfangslichtleiter kann für simultanen Empfang von durch die Dünnschichtplatte transmittierten und von der Dünnschichtplatte bzw. den auf der Dünnschichtplatte befindlichen Substanzen remittierten Licht angeordnet werden. Auch wenn Licht simultan empfangen wird, sind jeweils eigene optische Untersuchungseinrichtungen nicht zwingend. Kostengünstig werden die für Remission/Fluoreszenz und Transmission vorgesehenen Empfangslichtleiter zu ein und derselben optischen Untersuchungsvorrichtung geführt und dort alternierend ausgewertet. Dazu kann der Lichtweg zwischen optischer Untersuchungseinrichtung und Dünnschichtplatte etwa mittels eines Zerhackers selektiv alternierend abgeschottet werden, oder die Lichtleiter werden abwechselnd in die optische Untersuchungseinrichtung eingekoppelt. Damit findet eine quasisimultane Auswertung statt.

Eine besonders bevorzugte Variante des Dünnschichtchromatographiegerätes weist wenigstens je eine Reihe Sendelichtleiter und eine Reihe Empfangslichtleiter auf, bevorzugt mit je über 10 dicht nebeneinander angeordneten Lichtleiter.

Wird nur eine einzige Reihe aus Sendelichtleitern und Empfangslichtleitern gebildet, können Sendelichtleiter und Empfangslichtleiter als gemeinsam an der Dünnschichtchromatographieplatte endende Y-Fasern oder alternierend in einer Reihe angeordnet sein. Während bei der Verwendung von Y-Fasern eine 100%ige Überlappung von Sendelichtflecken und Empfangssichtfeldern gegeben ist, wird dies bei alternierend in einer Reihe angeordneten Sende- und Empfangslichtleitern nicht der Fall sein, was vorteilhaft ist, wenn durch ein geringeres Überlappungsintegral eine erhöhte Ortsauflösung angestrebt ist. Das Überlappungsintegral kann insbesondere durch den Abstand zwischen Lichtleiterenden und der Dünnschichtplatte beeinflußt werden.

Wenn Sendelichtleiter Licht unterschiedlicher spektraler Intensität abstrahlen, empfangt jeder Empfangslichtleiter Licht aus mehreren Sendelichtleitern. Dies verbessert die optische Auswertung durch die Üntersuchungseinrichtung.

Die Sende- und Empfangslichtleiter können in unterschiedlichen, parallelen Reihen angeordnet werden, wobei eine versetzte Anordnung "auf Lücke" zwischen Sende- und Empfangslichtleiterreihe bevorzugt wird, um eine bessere Lichtausbeute zu erzielen. Ein für alle Sende- und Empfangslichtleiter gleicher Durchmesser ist dabei nicht zwingend, was erforderlichenfalls eine dichtere Packung ermöglicht.

Auch sind unterschiedliche Materialien einsetzbar, etwa Quarzfasern zum Nachweis von UV-Licht und Teflonfasern für den Bereich oberhalb von 250 nm.

Falls gewünscht, kann die Lichtleiteranordnung zu einem breiten Besen angeordnet werden, wobei 30 Fasern mit je 100 µm Durchmesser etwa 3,5 mm Besenbreite ergeben und 50 Fasern bereits 5,5 mm. An den Rändern kann eine Abschattung vorgenommen werden, wenn dies für eine gegebene Dünnschichtplatte etwa wegen nur geringer Materialmengen zu viel ist. Hierzu kann wahlweise die Einkopplung von Licht in die äußeren Sendelichtleiter an der Lichtquelle, die Abstrahlung an der Platte, die Einstrahlung von Licht in die Empfangslichtleiter und/oder die Einkopplung von Licht aus den Empfangslichtleitern in die optische Untersuchungseinrichtung unterdrückt werden.

Sende- und Empfangslichtleiter werden bevorzugt mit einem Schrittmotor oder dergleichen relativ zur Dünnschichtplatte bewegt, um eine Chromatographiebahn abzutasten. Bevorzugt wird bei starrem Abtastkopf die Platte bewegt. Dies vermeidet Änderungen der Lichtübertragung in den Lichtleitern durch bewegungsbedingte Brechungsindexvariationen, etwa bei Knicken.

Die Orientierung der Dünnschichtplatte wird bevorzugt mit einer CCD-Kamera oder dergleichen visuell dokumentiert.

Auch kann ein Mittel zur Feststellung und/oder zum Ausgleich nicht planparallel liegender Dünnschichtplatten vorgesehen sein. Zur Feststellung der Plattenausrichtung kann der Abstand des Sende- und/oder Abtastkopfes von der Platte an voneinander beabstandeten, von Lösungsmittel und Substanz nicht beeinflußten Stellen der Platte als Weißstandard mit Referenzmessungen bestimmt werden. Solche Stellen sind beispielsweise hinter dem Eluens-Laufende der äußeren Bahnen oder seitlich von den äußeren Bahnen zu finden. Die Referenzmessung kann etwa die gesamte Lichtintensität in Reflexion bestimmen. Ist die Intensität des reflektierten Lichtes an den unterschiedlichen, beabstandeten Stellen nicht gleich, so liegt die Platte nicht parallel. Eine zuvor durchgeführte Messung kann dann verworfen werden oder es wird eine noch durchzuführende Messung unterdrückt. Wichtig ist vor allem eine Schräglage, die Unterschiede von Bahn zu Bahn vortäuscht, da typisch die Analyse durch Vergleich mit auf Nebenbahnen laufenden Substanzen erfolgt. Eine zu Unterschieden innerhalb einer Bahn führende Schräglage stört bei solchen Messungen hingegen praktisch nicht, kann aber dennoch leicht ausgeglichen werden. Die Sende- und/oder Empfangslichtleiter in der vorliegenden Anordnung können zur Erzielung kleiner Sendelichtflecken und somit hoher Ortsauflösungen dadurch dicht an der Platte geführt werden; üblich sind Abstände deutlich unter einem Millimeter, wie einige 100 µm. Die Korrektur verhindert, daß durch Schräglagen, wie sie schon durch Sandkörner oder dergl. unter der Dünnschichtplatte verursacht werden könnten, Meßfehler auftreten.

Die Erfindung wird im folgenden nur beispielsweise anhand der Zeichnung beschrieben. In dieser zeigt:
- Figur 1: ein Dünnschichtchromatographiegerät gemäß der vorliegenden Erfindung;
- Figuren 2 bis 14: bevorzugte Anordnungen von Sendelichtleitern "x" und Empfangslichtleitern "c".

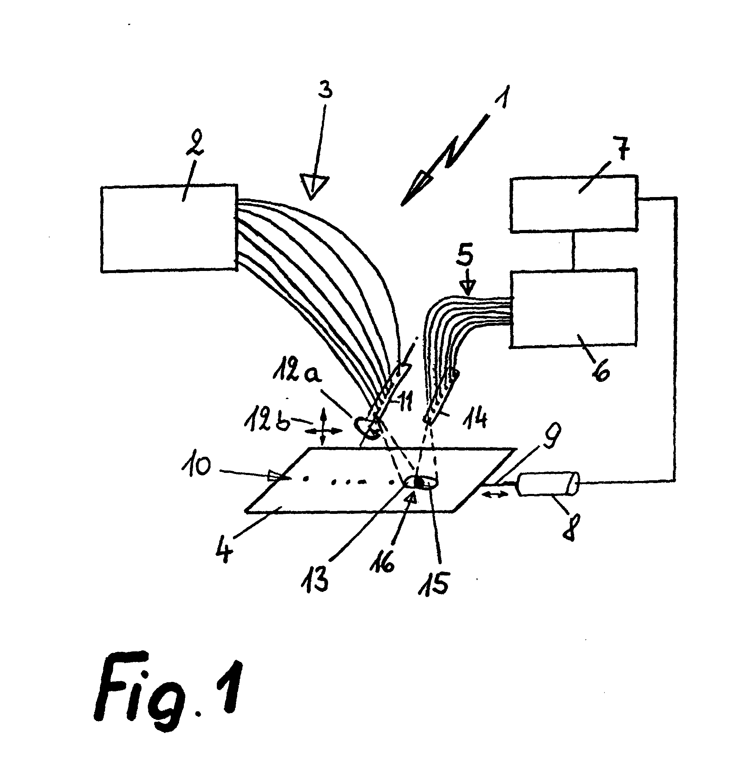

Nach Figur 1 umfaßt ein allgemein mit 1 bezeichnetes Dünnschichtchromatographiegerät eine Lichtquelle 2, an welche eine Vielzahl optischer Fasern 3 als Sendelichtleitern angekoppelt sind, um das Licht auf eine entwickelte Dünnschichtplatte 4 zu führen. Die Sendelichtleiter 3 werfen einen Sendelichtfleck 13 auf die Dünnschichtplatte 4, der gleichmäßig ausgeleuchtet sich langgestreckt über die ganze Breite einer Chromatographiebahn 10 ausdehnt. Empfangslichtleiter 5 sind bei der Dünnschichtplatte so angeordnet. Das Empfangssichtfeld 15 der Empfangslichtleiter 5 überlappt wenigstens partiell mit dem Sendelichtfleck 13 wie durch die das Überlappungsintegral darstellende geschwärzte Fläche 16 angedeutet, so daß das Sichtfeld 15 rückgestrahltes Remissions- und/oder Fluoreszenz-Licht erfaßt. Die Empfangslichtleiter 5 führen zu einer optischen Untersuchungseinrichtung 6, welche mit einer zentralen Steuer- und Datenverarbeitungseinheit 7 verbunden ist. Die Steuer- und Datenverarbeitungseinheit 7 steuert eine elektrische Verschiebeeinheit 8 wie einen Schrittmotor, mit welchem die Dünnschichtplatte 4 über einen Koppelmechanismus 9 relativ zu den Sende- und Empfangslichtleitern 3 bzw. 5 derart bewegt werden kann, daß eine Chromatographiebahn 10 unter den Lichtleitern 3 bzw. 5 bewegt wird. Die Bewegung der Dünnschichtplatte 4 erfolgt bevorzugt mittels eines von einer 7 wie einem PC gesteuerten Schrittmotor 8 oder dergleichen.

Bei der Lichtquelle 2 kann es sich um eine Deuteriumlampe, eine Wolframlampe, eine kombinierte Deuterium- und Wolfram-Lampe (Durchscheinlampe), eine breitbandige Hochdrucklampe, eine schmalbandige Niederdrucklampe einen gepulsten oder Dauerstrichlaser, z.B. Excimer-Laser, Metalldampflaser, Nd-YAG-Laser, durchstimmbare Laser wie Ringlaser, auch harmonisch frequenzvervielfacht,und dergleichen handeln. Im Strahlengang zwischen Lichtquelle und Lichteinkoppelenden der Sendelichtleiter 3 können Filter wie schmalbandige Interferenzfilter, Bandpassfilter, Kantenfilter und dergleichen sowie Linsen zur Erhöhung der Einkoppeleffizienz und/oder Streuscheiben zur gleichmäßigen Ausleuchtung aller Sendelichtleiter 3 vorgesehen werden.

Als Sendelichtleiter 3 kommen Quarzfasern, Teflonfasern oder herkömmliche Glasfasern in Betracht. Die Verwendung von auch im weiten Ultraviolettbereich transparenten Lichtleitern ist vorteilhaft. Es können Lichtleiter mit einem Durchmesser von beispielsweise 50 µm bis 200 µm verwendet werden, wobei zur Erzeugung kleiner Lichtflecken auf der Dünnschichtchromatographieplatte mit demzufolge besserer Ortsauflösung kleine Lichtleiterdurchmesser bevorzugt sind. Die Lichtleiter müssen aber nicht zwingend rund sein.

Wenn ummantelte Fasern als Sendelichtleiter 3 verwendet werden, ist es möglich, am Lichquellenende die Fasermäntel wegzuätzen und die Faserenden zur besseren Ausnutzung der Lampenintensität zu verschweißen, etwa mittels eines Lasers, oder in durchsichtigem Kunstharz wie Epoxydharz einzugießen. Wenn vor einer derartigen Anordnung eine Streuscheibe angebracht wird, wird eine gleichmäßige Ausleuchtung aller Fasern und somit eine über die Reihenbreite zumindest nahezu konstante Ausleuchtung der Dünnschichtplatte erzielt.

Am Austrittsende der Sendelichtleiter 3 können die Fasern erforderlichenfalls mit Zylinderlinsen mit Brennweiten von beispielsweise etwa 2,5 mm, Fresnellinsen oder dergleichen versehen werden, sofern die sich bei der Verwendung von Linsen ergebende Dispersion nicht stört und ein besonderes Lichtmuster auf der Dünnschichtplatte gewünscht wird. Wahlweise können die Faserenden auch rund oder spitz zugeschliffen werden oder in herkömmlicher Weise als Schnitt- bzw. Bruchkante ohne weitere Maßnahmen verwendet werden. Gleichfalls denkbar ist das Aufpolieren der Faserenden oder dergleichen.

Die Sendelichtleiter-Faserenden sind bevorzugt gemeinsam in einer einige Millimeter breiten Reihe nebeneinander angeordnet und in einer Halterung 11 fixiert, die nach Pfeil 12a um ihre Längsachse schwenkbar und nach Pfeilen 12b senkrecht zur Dünnschichtplatte und parallel in Richtung auf die Empfangslichtleiterreihe zu bewegbar ist. Verschieben der Senderlichtleiterreihe parallel zur Dünnschichtplatte und/oder Schwanken der Senderlichtleiterreihe um die Längsachse (Pfeil 12a) ändert das Überlappungsintegral 16. Die Empfangslichtleiterreihe ist fixierbar.

Falls gewünscht, ist an der Halterung 11 eine Vorrichtung vorgesehen, mit welcher der Abstand der Sendelichtleiter 3 zueinander in der Reihe justiert werden kann (nicht gezeigt). Wegen des geringen erforderlichen Hubs ist dafür ein piezoelektrischer Modulator einsetzbar. Auf diese Weise kann die Breite der ausgeleuchteten Bahn eingestellt werden.

Während in der Zeichnung aus Darstellungsgründen Abstände zwischen der Dünnschichtplatte und den Sende- und Empfangslichtleitern dargestellt sind, welche den typischen Dünnschichtplattenabmessungen nahezu entsprechen, wird der Abstand von Sendeund/oder Lesekopf in der Praxis nur einige 100 µm Höhe über der Dünnschichtplatte betragen.

In der Praxis wird eine größere Anzahl an Lichtleitern in einer Reihe als dargestellt bevorzugt. Die jeweilige Anzahl in einer Reihe beträgt beispielsweise 50 bis 100 Lichtleiter. Obwohl das Prinzip der vorliegenden Erfindung auch mit einer geringen Zahl an Lichtleitern ausgeführt werden kann, wie 5 bis 10 Lichtleiter, ist eine sehr große Zahl Lichtleiter bevorzugt, um in der extremen Spurenanalytik breite Strichauftragungen lichtstark abtasten zu können. Die breite Strichauftragung der Ausgangssubstanz gibt entsprechend breite Substanzbänder auf der Dünnschichtplatte.

Die Dünnschichtplatte 4 ist eine vorentwickelte oder in dem Dünnschichtchromatographiegerät der vorliegenden Erfindung entwickelte Dünnschichtplatte. Der Einsatz anderer Trägermaterialien für die mobile Phase außer Platten, etwa flexible Träger ist ebenfalls denkbar, wird aber für die vorliegenden Zwecke unter dem Begriff Dünnschichtplatte subsummiert.

Die Empfangslichtleiter 5 sind in einer Reihe nebeneinander in einer Fixierung 14 angeordnet, in welcher der Abstand der Fasern zueinander erforderlichenfalls ebenfalls wie gewünscht einstellbar ist. Sofern die Einstellung des Faserabstandes etwa piezoelektrisch moduliert erfolgt, kann der Abstand z.B. von der Steuerung 7 eingestellt werden.

In der bevorzugten Ausführungsform ist der Durchmesser der Empfangslichtleiter 5 kleiner als der Durchmesser der Sendelichtleiter 3. Bei gleichen Lichtleitermaterialien ist der Empfangslichtfleck kleiner als der Sendelichtfleck und es wird die Einkopplung von Störlicht noch weiter reduziert, was das Signalrauschverhältnis verbessert, obgleich schon bei identischen Durchmessern für Sende- und Empfangslichtleiter eine so gute Restlichtunterdrückung stattfindet, daß das Dünnschichtchromatographiegerät im normalen Einsatz ohne Abdunklung betrieben werden kann.

Die Sendelichtleiter 5 führen zu der optischen Untersuchungseinrichtung 6, bei welcher es sich um ein Spektrometer handeln kann, an welchem die Empfangslichtleiter so nebeneinander angekoppelt sind, daß sie den Eingangsspalt gleichmäßig und verlustfrei ohne Lochblende oder dergleichen ausleuchten. Wie erforderlich können Lichtleiter direkt auf einem dispersiven Element wie einem Prisma angeordnet werden, wenn z.B. teuere und durch Reflexionen an den Grenzschichten häufig störende UV-Linsen vermieden werden sollen.

Eine fixierte Lichtleitergeometrie am Spektrometerspalt und an der Dünnschichtplatte erfordert lediglich eine einmalige und somit zeitsparende Einjustierung, erlaubt aber dennoch durch die hohe Reproduzierbarkeit und die gute Einkoppelefizienz Signalauflösungen von mehr als 14 Bit auch mit herkömmlichen optischen Untersuchungseinrichtungen. Am Spektrometer ist eine Diodenzeile oder dergleichen bevorzugt, insbesondere eine photonzählende CCD-Anordnung, um das komplette Spektrum simultan abzutasten.

Das Dünnschichtchromatographiegerät wird wie folgt betrieben.

Zunächst wird die Dünnschichtplatte fertig entwickelt. Dann wird die Dünnschichtplatte 4 in das Dünnschichtchromatographiegerät gelegt.

Falls eine optische Justierung gewünscht ist, kann das Überlappungsintegral durch Schwenken der Reihe 11 und Verschieben der Reihen 11 und 14 eingestellt werden. Die Verschwenkung senkrecht gegen die Platte wird so klein gehalten, daß nach dem Lambert 'schen Cosinusgesetz keine relevanten Intensitätsverluste auftreten. Die Überlappung wird für die gewünschte Ortsauflösung eingestellt: Je stärker die Überlappung ist, desto niedriger ist die Ortsauflösung, aber die Nutzungseffizienz des eingestrahlten Lichtes steigt. Verschiebeeinheit 8 wird in die Ausgangsstellung bewegt.

Dann wird die Lichtquelle 2 erregt. Licht gelangt durch die Sendelichtleiter 3 in Form eines engen, hell erleuchteten Schlitzes auf die Dünnschichtplatte 4, wo es die Breite einer ganzen Chromatographiebahn 10 ausleuchtet. Erforderlichenfalls wird zunächst noch die Gesamt-Intensität des von der Dünnschichtplatte reflektierten Lichtes an beabstandeten, nicht von Lösungsmitteln und dergl, berührten Stellen gemessen. Ist die so gewonnne Weißlichtreferenz an den Stellen gleich, liegt die Dünnschichtplatte 4 plan. Anstelle der Weißlichtreferenz ist auch ein Bezug auf bestimmte Spektralkomponenten möglich.

Das aufgetrennte Substanzgemisch auf der Chromatographiebahn 10 absorbiert an einigen Orten in bestimmten Spektralbereichen Licht und fluoresziert in anderen Spektralbereichen. Das so veränderte Licht, welches von der Dünnschichtplatte abgestrahlt wird, gelangt zumindest zum Teil in die Empfangslichtleiter 5, da sich die Sendelichtflecken und die Empfangssichtfelder einstellbar überlappen.

Das in die Empfangslichtleiter 5 eingestrahlte Licht wird durch die Empfangslichtleiter zu der optischen Untersuchungseinrichtung geführt und dort in seine spektralen Bestandteile zerlegt. Wenn das Spektrum im Spektrometer mit einer Diodenzeile detektiert wird, ist eine schnelle Aufnahme des kompletten Spektrums möglich.

Es kann so ein dreidimensionales Parameterfeld für das Chromatogramm gewonnen werden, wobei Wellenlänge, Absorption bzw. Fluoreszenz und Strecke längs der Chromatographiebahn die drei Parameter darstellen. Durch die breite, schlitzartige Ausleuchtung der ganzen Bahn werden Fehler durch Messung an der falschen Stelle quer zur Bahn solange vermeiden, wie der Besen hinreichend breit ist.

Die Daten werden von der Steuer- und Verarbeitungseinheit 7 über entsprechende Signalelektronik ausgelesen. Die Auswertung ist in Echtzeit oder später möglich, wozu vorzugsweise Rohdaten, etwa die Lichtintensitäten abgespeichert werden.

Sobald an einer Stelle ein Spektrum aufgenommen ist, wird der Schrittmotor 8 erregt, um die Dünnschichtplatte 4 -ein definiertes Stück weiter zu bewegen. Die Bewegungsweite bestimmt sich dabei nach der Auflösung σ, welche jeweils für eine gegebene Untersuchung sowohl aus der Dünnschichtplattenentwicklung als auch aus der optischen Anordnung heraus zu erwarten ist. Es wird bevorzugt, bei einer Auflösung von etwa 100 µm (4σ) eine Verschiebung um etwa 50 µm vorzunehmen. Bei typischen Entwicklungs-Laufhöhen von 50 mm ergeben sich 1000 Spektren pro Bahn. Da durch die gute Hintergrundunterdrückung die Meßzeiten kurz gewählt werden können, ist dennoch eine Aufnahmezeit pro Bahn binnen ca. 60 sec. oder darunter möglich.

Nach Verschieben der Dünnschichtplatte wird ein neues Spektrum aufgenommen. Dies setzt sich fort, bis das Ende einer Laufbahn bzw. der Dünnschichtplatte erreicht ist. Dann kann eine weitere Bahn, gegebenenfalls gegenläufig, abgetastet werden.

Falls gewünscht, kann ergänzend die Ausrichtung der Dünnschichtplatte im Dünnschichtchromatographiegerät z.B. mit einer CCD-Kamera aufgenommen und dokumentiert werden.

Dank des breiten, gleichmäßig ausgeleuchteten Bereiches, über den die Sendelichtleiter emittieren, ist eine exakte und daher teure Winkelausrichtung der Dünnschichtplatte nicht erforderlich. Vielmehr kann bei schräg in das Dünnschichtchromatographiegerät eingelegte Dünnschichtplatten erforderlichenfalls eine der exakten Laufrichtung folgenden Spur bei der nachträglichen Datenanalyse festgelegt werden.

Während im vorhergehenden zwei getrennte Sende- und Empfangslichtleiterreihen vorgesehen sind, ist dies nicht zwingend erforderlich und es können auch andere Lichtleiteranordnungen gewählt werden. Zudem ist es auch möglich, eine der Sende- und Empfangslichtleiteranordnungen oberhalb der Dünnschichtplatte und die andere unterhalb der Dünnschichtplatte anzuordnen, um die durch das aufgetrennte Stoffgemisch verursachte Absorption zu bestimmen.

Während im vorhergehenden Beispiel die Dünnschichtplatte längs ihrer Laufbahnrichtung verschoben wurde, um ein Spektrum einer einzelnen Bahn aufzunehmen, ist dies nicht zwingend erforderlich. Vielmehr kann die Platte auch quer zu ihrer Laufrichtung untersucht werden, insbesondere dann, wenn anstelle einer qualitativen Analyse eine quantitative Bestimmung einer bekannten Substanz mit bekannten Laufreihen in einer Vielzahl von Proben erfolgen soll. Bei dieser Messung werden also mehrere Substanzproben in X-Richtung nebeneinander auf die Platte gebracht und in hierzu orthogonaler Y-Richtung entwickelt, so daß sich eine Gemischaufspaltung in Y-Richtung ergibt. Nun wird die Laufweite der zu bestimmenden Substanz ermittelt, also die Y-Koordinate, bis zu der die verschiedenen, in X-Richtung nebeneinander aufgetragen Proben gelaufen sind. Die Sende- und Empfangslichtleiterreihe wird auf diese Y-Position gesetzt und in X-Richtung über alle Laufbahnen der verschiedenen Proben bewegt. Dies ist dann besonders vorteilhaft, weil die Auswertung mit einem Dünnschichtchromatographie-Scanner einen der zeitaufwendigsten Vorgänge der gesamten Analyse darstellt, wenn eine Vielzahl von Laufbahnen ausgewertet werden müssen. Der hohe Zeitaufwand kann durch die gleichzeitige oder nahezu simultane Auswertung nur eines sehr kurzen Abschnittes vieler Laufbahnen beachtlich verkürzt werden. Die Erfindung ermöglicht eine solche Auswertung, da die Sende- und Empfangslichtleiterreihen eine größere Ausdehnung als der Probenfleck auf der einzelnen Laufbahn besitzen. Auch bei dieser Anwendung ist eine genaue Justierung nicht erforderlich. Ein Einsatz insbesondere in der Getränkeindustrie, etwa zur Bestimmung des Coffeingehaltes von Limonaden durch quantitative Dünnschichtchromatographie ist ohne weiteres möglich.

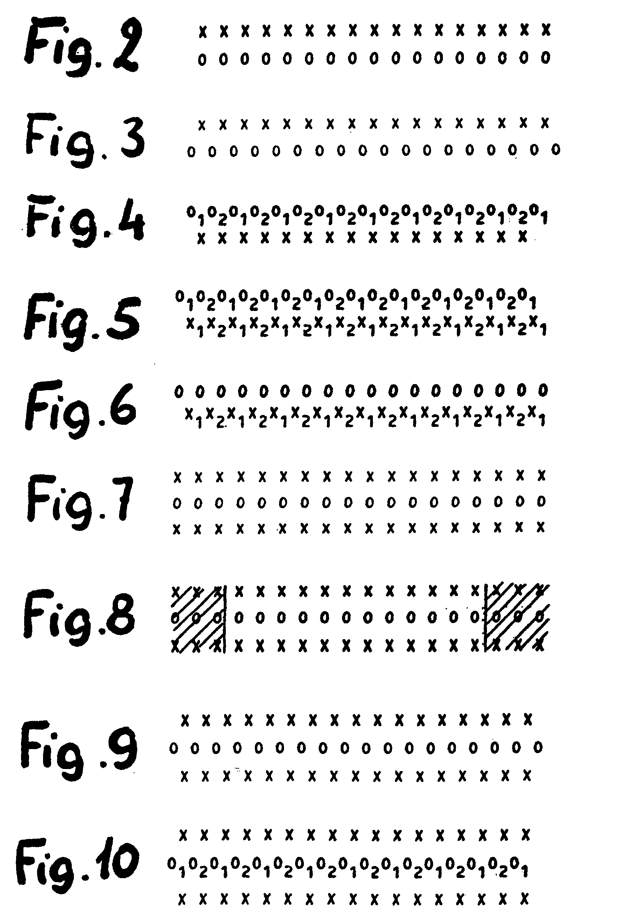

Weitere Sende- und Empfangslichtleiteranordnungen werden nun mit Bezug auf die Figuren 2 bis 12 beschrieben. Es versteht sich, daß diese Lichtleiteranordnungen in einem Dünnschichtchromatographiegerät wie allgemein vorstehend beschrieben verwendet werden können.

In den Figuren 2 bis 12 steht das Zeichen "X" jeweils für einen Sendelichtleiter, während das Zeichen "O" jeweils für einen Empfangslichtleiter steht. Zur besseren Veranschaulichung ist die Anzahl Lichtleiter kleiner als praktisch bevorzugt. Einsichtigerweise können Sende- und Empfangslichtleiter insbesondere bei Anordnung in unterschiedlichen Reihen wahlweise gemeinsam oder wie in Figur 1 gezeigt separat gehalten und fixiert werden.

Die verschiedenen Lichtleiter-Anordnungen haben unterschiedliche Ortsauflösungen sowie unterschiedliche Nutzungseffizienzen des eingestrahlten Lichtes zur Folge. Die verschiedenen erwarteten Ortsauflösungen für Fasern des Durchmessers 100µm und die bei in der jeweiligen Anordnung erwartete Lichtausbeute durch maximale Überlappung von Sende- und Empfangslichtflecken ist in der unten stehenden Tabelle angegeben.

Nach Figur 2 sind Sende- und Empfangslichtleitern jeweils direkt nebeneinander angeordnet.

Nach Figur 3 sind Sende- und Empfangslichtleiterreihen gegeneinander versetzt, stehen also auf Lücke.

Nach Figur 4 wird über durchgehend gleiche Sendelichtleiter X Licht über unterschiedliche Lichtleiter bzw. zu unterschiedlichen Teilen einer optischen Untersuchungseinrichtung zugeführt; beispielsweise können zwei Spektrometer mit unterschiedlicher spektraler Empfindlichkeit vorgesehen werden.

Figur 5 entspricht 4 weitgehend, jedoch wird den Sendlichtleitern X₁ Licht aus einer ersten Lichtquelle und den Sendelichtleitern X₂ Licht aus einer zweiten Lichtquelle zugeführt. Auf diese Weise kann ein gewünschtes Ausleuchtungsspektrum erhalten werden.

Figur 6 entspricht Figur 5 weitgehend, jedoch sind alle Empfangslichteiler gleich und führen zum gleichen Spektrometer.

Figur 7 zeigt eine Anordnung, bei welcher eine Reihe Empfangslichtleiter zwischen zwei Sendelichtleiterreihen angeordnet ist. Analog wäre die Anorndung einer Sendelichtreihe zwischen zwei Empfangslichtleiterreihen möglich und für Fluoreszenzmessungen wegen der Lichtausbeute von praktisch 100% bei einer Ortsauflösung von 200µm bei Fasern von 100µm vorteilhaft.

Figur 8 zeigt beispielhaft, daß durch Abschattung der äußeren Randbereiche der Anordnung von Fig. 7 die Breite, über welche die Dünnschichtplatte abgetastet wird, verringert werden kann. Statt dessen oder zusätzlich könnten parallel angeordnete Sende- und Empfangslichtleiter -Reihen auch in der Reihenrichtung so gegeneinander verschoben, daß die jeweils äußeren Lichtleiter ungepaart sind. Danach sind am einen Ende überschüssige Sendelichtleiter und am anderen Ende überschüssige Empfangslichtleiter vorhanden und die effektive Besenbreite verringert sich auf den mittleren Besen-Bereich, wo noch gepaarte Lichtleiter vorliegen.

Figur 9 entspricht weitgehend der Anordnung von Figur 7, jedoch sind Sende- und Empfangslichtleiter gegeneinander auf Lücke gesetzt.

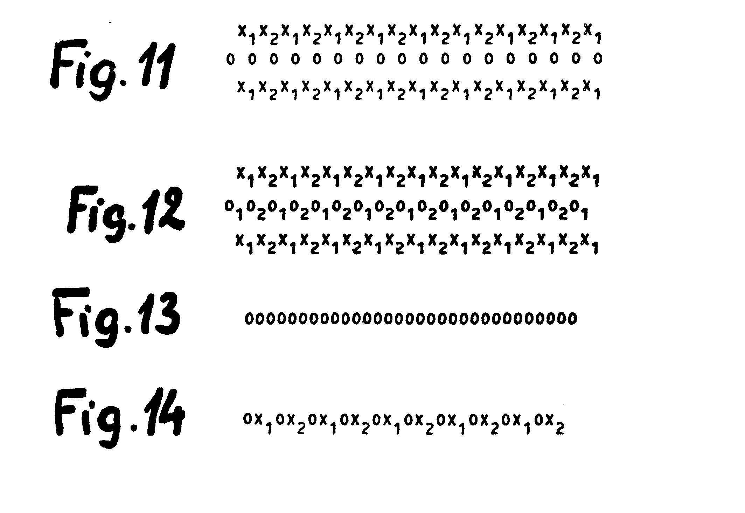

Die Figuren 10 bis 12 zeigen, wie in Sendelichtleiter Licht aus unterschiedlichen Lichtquellen eingekoppelt wird bzw. wie diese alternierend zu unterschiedlichen optischen Untersuchungseinrichtungen geführt werden können.

Nach Figur 13 werden Y-Fasern verwendet.

Figur 14 zeigt die alternierende Anordnung von Sende- und Empfangslichtleitern in einer Reihe nebeneinander. Auch hier ist es möglich, Licht aus zwei Lampen simultan auf die Dünnschichtplatte einzustrahlen und/oder Licht unterschiedlichen optischen Untersuchungseinrichtungen zuzuführen.

Es ergeben sich mit den Anordnungen unterschiedliche optische Eigenschaften wie folgt:

| Anordnung nach Figur | Ortsauflösung auf der Dünnschichtplatte (geschätzt) [µm] | Lichtausbeute (geschätzt) [%] |
|---|---|---|
| Figur 2 | 90 | 33 |
| Figur 3 | 105 | 35 |
| Figur 4 | 90 | 33 |
| Figur 5 | 90 | 33 |
| Figur 6 | 90 | 33 |
| Figur 7 | 200 | 100 |
| Figur 9 | 190 | 100 |
| Figur 10 | 190 | 100 |
| Figur 11 | 190 | 100 |
| Figur 12 | 190 | 100 |
| Figur 14 | 190 | 100 |
| Figur 15 | 160 | 36 |

Es wurde demnach ein schnelles, automatisches Dünnschichtchromatographiegerät beschrieben, bei welchem durch Mehrwellendetektion eine Überprüfung der Trennreinheit möglich ist, was die Validierung des Trennsystems ermöglicht. Durch die fixierte Lichtleitergeometrie des beschriebenen Gerätes entfallen die Justierprobleme weitgehend und auch dispersive Korrekturen und dergleichen sind nicht mehr erforderlich. Die Ortsauflösung kann individuell auf einfache Art und Weise eingestellt werden, einfach indem der Abstand der Lichtleiter zur Dünnschichtplatte verändert wird und es kann, insbesondere simultan in Remision, Transmision und in Fluoreszenz gemessen werden. Dabei ist das System dank des Wegfalls von Linsensystemen preiswert, ermöglicht einen modularen Aufbau, ist kompakt, erlaubt die Auswertung strich- und punktförmiger. Auftragungen und eine nachträgliche Untergrundkorrektur bei verschiedenen Wellenlängen ohne erneute Messung.

Mit der beschriebenen Anordnung ist es möglich, eine Dünnschichtchromatographiebahn dreidimensional, nämlich hinsichtlich der XY-Position auf der Dünnschichtplatte sowie der spektralen Eigenschaften (dritte Dimension) darzustellen.

## Patentansprüche

1. Dünnschichtchromatographiegerät (1) mit
einer Mehrzahl optischer Sendelichtleiter (3)
zur Einstrahlung von Licht auf eine Dünnschichtplatte (4) und einer Mehrzahl optischer Empfangslichtleiter (5) um Licht von der Dünnschichtplatte einer optischen Untersuchungseinrichtung (6) zuzuleiten,
wobei Sende- und Empfangslichtleiter eine geordnete regelmäßige, geometrische Ausrichtung derart aufweisen,
daß sich Sendelichtleiter-Lichtflecken und Empfangslichtleiter-Sichtfeld zumindest partiell überlappen,
**dadurch gekennzeichnet, daß** ein Überlappungsintegral-Einstellmittel vorgesehen ist, mittels welchem das Überlappungsintegral von Sendelichtflecken und Empfangssichtfeld einstellbar ist.

2. Anspruch nach dem vorhergehenden Anspruch,
**dadurch gekennzeichnet, daß** die Sendelichtleiter zur gleichmäßigen Ausrichtung über eine Fleckenbreite angeordnet sind.

3. Dünnschichtchromatographiegerät nach dem vorhergehenden Anspruch,
**dadurch gekennzeichnet, daß**
das Überlappungsintegraleinstellmittel zur Einstellung des Lichtleiterabstandes zueinander und/oder zur Dünnschichtplatte ausgebildet ist.

4. Dünnschichtchromatographiegerät nach einem der vorhergehenden Ansprüche, worin zur geordneten geometrischen Ausrichtung Sendelichtleiter und/oder die Empfangslichtleiter eine Vielzahl, vorzugsweise mindestens 10 Sendeleiter dicht nebeneinander aufgereiht angeordnet sind, insbesondere linear und so dicht, daß die Lichtflecken benachbarter Sendelichtleiter auf der Dünnschichtplatte allenfalls um weniger als den Sichtfelddurchmesser eines Empfangslichtleiters beabstandet sind.

5. Dünnschichtchromatographiegerät nach dem vorhergehenden Anspruch, worin wenigstens zwei allgemein parallele Sendelichtleiter-Reihen vorgesehen sind, deren Lichtflecken auf der Dünnschichtplatte allenfalls um weniger als den Sichtfelddurchmesser eines Empfangslichtleiters beabstandet sind.

6. Dünnschichtchromatographiegerät nach einem der vorhergehenden Ansprüche, worin der Sendelichtleiter-Abstand einstellbar ist, insbesondere piezoelektrisch moduliert.

7. Dünnschichtchromatographiegerät nach einem der vorhergehenden Ansprüche, mit einer Einkoppelvorrichtung zum eingangsseitigen Einkoppeln von Licht aus wenigstens zwei unterschiedlichen Lichtquellen bestimmter spektraler Intensität in die Sendelichtleiter.

8. Dünnschichtchromatographiegerät nach dem vorhergehenden Anspruch, worin die Lichtquellen und/oder die Einkoppelvorrichtung und/oder die Sendelichtleiter so ausgelegt sind, daß aus zwei dünnschichtplattenseitig benachbarten Sendelichtleitern Licht unterschiedlicher spektraler Intensität auf die Dünnschichtplatte emittiert wird.

9. Dünnschichtchromatographiegerät nach dem vorhergehenden Anspruch, worin einem oder mehreren Sendelichtleitern zur gezielten Beeinflussung der spektralen Verteilung auf die Dünnschichtplatte eingestrahlten Lichtes und/oder zur Erhöhung der Einkopplungseffizienz wenigstens ein dispersives Element zugeordnet ist, insbesondere ein Kantenfilter, ein Bandpaßfilter oder eine Ein- bzw. Auskoppellinse.

10. Dünnschichtchromatographiegerät nach einem der vorhergehenden Ansprüche mit aufgereiht angeordneten Empfangslichtleitern, vorzugsweise mindestens 20, insbesondere bevorzugt zwischen 50 und 100 aufgereihten Empfangslichtleitern.

11. Dünnschichtchromatographiegerät nach dem vorhergehenden Anspruch, worin Empfangslichtleiter zum simultanen Empfang von transmittiertem und remittiertem Licht angeordnet sind, insbesondere mit je mindestens einer Empfangslichtleiter-Reihe oberhalb und unterhalb der Dünnschichtplatte.

12. Dünnschichtchromatographiegerät nach einem der vorhergehenden Ansprüche, worin die Sendelichtleiter und Empfangslichtleiter jeweils in Reihe angeordnet sind.

13. Dünnschichtchromatographiegerät nach Anspruch 12, worin Sende- und Empfangslichtleiter gemeinsam eine Reihe bilden, insbesondere mit an der Dünnschichtplatte endenden Y-Fasern oder mit alternierend angeordneten Sende- und Empfangslichtleitern.

14. Dünnschichtchromatographiegerät nach Anspruch 12, worin Sende- und Empfangslichtleiter in parallelen Reihen angeordnet sind, insbesondere mit einer Empfangslichtleiter-Reihe zwischen zwei Sendelichtleiter-Reihen und bevorzugt versetzt gegen diese und/oder mit aufeinander zuweisend beidseits der Dünnschichtplatte angeordneten Sende- und Empfangslichtleiter-Reihen.

15. Dünnschichtchromatographiegerät nach Anspruch 14, worin eine Sendelichtleiter-Reihe zwischen zwei Empfangslichtleiter-Reihen angeordnet ist und bevorzugt die optische Untersuchungseinrichtung für Fluoreszenzmessungen ausgebildet ist.

16. Dünnschichtchromatographiegerät nach einem der vorhergehenden Ansprüche, worin Sende- und Empfangslichtleiter unterschiedliche Durchmesser besitzen, wobei insbesondere der/die Empfangslichtleiter-Durchmesser größer als der/die Sendelichtleiter-Durchmesser ist/sind.

17. Dünnschichtchromatographiegerät nach einem der vorhergehenden Ansprüche mit einer Einstellvorrichtung zur Verringerung der verwendeten Sende- und/oder Empfangslichtleiterzahl.

18. Dünnschichtchromatographiegerät nach einem der vorhergehenden Ansprüche mit einer Schrittmotorsteuerung zur Bewegung von Sende- und Empfangslichtleitern insbesondere gemeinsam relativ zur Dünnschichtplatte.

19. Dünnschichtchromatographiegerät nach einem der vorhergehenden Ansprüche mit einer CCD-Kamera zur Dokumentation der Dünnschichtplattenausrichtung.

20. Dünnschichtchromatographiegerät nach einem der vorhergehenden Ansprüche mit einem Mittel zur Feststellung und/oder zum Ausgleich nicht planparallel liegender Dünnschichtplatten.

## Claims

1. Thin-layer chromatography apparatus (1) having a pluratity of optical emitting light conductors (3) for irradiating light onto a thin-layer plate (4) and a plurality of optical receiving light conductors (5) in order 10 pass light from the thin-layer plate of an optical investigation device (6), wherein emitting and receiving light conductors have an ordered regular, geometric alignment such that emitting light conductor light spots and receiving light conductor viewing field at least partially overlap, **characterised in that** in overlapping integral adjusting means is provided, by means of which the overlapping integral of emitting light spots and receiving viewing field can be adjusted.

2. Claim according to the preceding claim, **characterised in that** the emitting light conductors are arranged over a spot width for uniform alignment.

3. Thin-layer chromatography apparatus according to the preceding claim, **characterised in that** the overlapping integral adjusting means is designed to adjust the light conductor distance from one another and/or from the thin-layer plate.

4. Thin-layer chromatograpby apparatus according to one of the preceding claims, wherein for ordered geometric alignment of emitting light conductors and/or the receiving light conductors, a number, preferably at least 10 emitting conductors, are arranged in rows closely next to one another, in particular linearly and so closely that the light spots of adjacent emitting light conductors on the thin-layer plate are spaced at best by less than the viewing field diameter of a receiving light conductor.

5. Thin-layer chromatography apparattus according to the preceding claim, wherein at least two generally parallel emitting light conductor rows are provided, the light spots of which on the thin-layer plate are spaced at best by less than the viewing field diameter of a receiving light conductor.

6. Thin-layer chromatography apparatus according to one of the preceding claims, wherein the emitting light conductor distance can be adjusted, in particular modulated piezoelectrically.

7. Thin-layer chromatography apparatus according to one of the preceding claims, having a coupling device for input-side coupling of light from at least two different light sources of certain spectral intensity into the emitting light conductors.

8. Thin-layer chromatography apparatus according to the preceding claims, wherein the light sources and/or the coupling device and/or the emitting light conductors are designed so that light of different spectral intensity is emitted onio the thin-layer plate from two adjacent emitting light conductors on the thin-layer plate side.

9. Thin-layer chromatography apparatus according to the preceding claim, wherein at least one dispersive element, in particular a cut-off filter, a bandpass filter or a coupling or uncoupling lens, is assigned to one or more emitting light conductors for specifically influencing the spectral distribution of light irradiated onto the thin-layer plate and/or for increasing the coupling efficiency.

10. Thin-layer chromatography apparatus according to one of the preceding claims having receiving light conductors arranged in rows, preferably at least 20, in particular preferably between 50 and 100 receiving light conductors in rows.

11. Thin-layer chromatography apparatus according to the preceding claim, wherein receiving light conductors are arranged for simultaneous receiving of transmitted and remitted light, in particular each having at least one receiving light conductor row above and below the thin-layer plate.

12. Thin-layer chromatography apparatus according to one of the preceding claims, wherein the emitting light conductors and receiving light conductors are arranged in each case in a row.

13. Thin-layer chromatogaphy apparatus according to claim 12, wherein emitting and receiving light conductors together form a row, in particular with Y fibres terminating at the thin-layer plate or with alternately arranged emitting and receiving light conductors.

14. Thin-layer chromatography apparatus according to claim 12, wherein emitting and receiving light conductors are arranged in parallel rows, in particular with one receiving light conductor row between two emitting light conductor rows and preferably offset with respect to the latter and/or with emitting and receiving light conductor rows arranged assigned to one another on both sides of the thin-layer plate.

15. Thin-layer chromatography apparatus according to claim 14, wherein one emitting light conductor row is arranged between two receiving light conductor rows and the optical investigation device is preferably designed for fluorescence measurements.

16. Thin-layer chromatography apparatus according to one of the preceding claims. wherein emitting and receiving light conductors have different diameters, wherein in particular the receiving light conductor diameter/s is/are greater than the emitting light conductor diameter/s.

17. Thin-layer chromatography apparatus according to one of the preceding claims having an adjusting device for reducing the number of emitting and/or receiving light conductors used.

18. Thin-layer chromatography apparatus according to one of the preceding claims having a stepping motor control for moving emitting and receiving light conductors, in particular together, relative to the thin-layer plate.

19. Thin-layer chromatography apparatus according to one of the preceding claims having a CCD camera for documenting thin-layer plate alignment.

20. Thin-layer chromatography apparatus according to one of the preceding claims having a means for determining and/or for compensating thin-layer plates not lying in plane-parallel manner.

## Revendications

1. Appareil de chromatographie en couche mince (1) avec une multitude de conducteurs optiques d'émission de lumière (3) pour l'irradiation par la lumière sur une plaque à couche mince (4), et une multitude de conducteurs optiques de réception de lumière (5) pour acheminer la lumière de la plaque à couche mince à une installation optique d'analyse (6), les conducteurs optiques d'émission de lumière et de réception de lumière présentant une disposition géométrique ordonnée et régulière, de telle sorte que les taches de lumière des conducteurs optiques d'émission de lumière et le champ « visuel » des conducteurs optiques de réception de lumière se chevauchent au moins partiellement, **caractérisé en ce qu'**un moyen de réglage de l'intégrale de chevauchement est prévu, au moyen duquel l'intégrale de chevauchement de taches de lumière des conducteurs optiques d'émission de lumière et de champ visuel des conducteurs optiques de réception de lumière est réglable.

2. Revendication selon la revendication précédente, **caractérisée en ce que** les conducteurs optiques d'émission de lumière sont disposés sur une largeur de tache pour un alignement uniforme.

3. Appareil de chromatographie en couche mince selon la revendication précédente, **caractérisé en ce que** le moyen de réglage de l'intégrale de chevauchement est configuré pour le réglage de l'écartement réciproque des conducteurs optiques et / ou de leur distance à la plaque à couche mince.

4. Appareil de chromatographie en couche mince selon une des revendications précédentes, dans lequel, pour l'alignement géométrique ordonné des conducteurs optiques d'émission de lumière et / ou les conducteurs optiques de réception de lumière, une multitude de conducteurs optiques d'émission de lumière, de préférence au moins 10, sont disposés en rangées très prés les uns à côté des autres, en particulier en ligne droite, et sont si serrés que, sur la plaque à couche mince, les taches de lumière de conducteurs optiques d'émission de lumière voisins sont écartées dans le cas le plus extrême de moins du diamètre du champ de vision d'un conducteur optique de réception de lumière.

5. Appareil de chromatographie en couche mince selon la revendication précédente, dans lequel sont prévues au moins deux rangées de conducteurs optiques d'émission de lumière en général parallèles, dont les taches de lumière sur la plaque à couche mince sont écartées dans le cas le plus extrême de moins du diamètre du champ de vision d'un conducteur optique de réception de lumière.

6. Appareil de chromatographie en couche mince selon une des revendications précédentes, dans lequel l'écartement des conducteurs optiques d'émission de lumière est réglable, en particulier modulé piézo-électriquement.

7. Appareil de chromatographie en couche mince selon une des revendications précédentes, avec un dispositif d'alimentation pour l'introduction côté entrée dans les conducteurs optiques d'émission de lumière d'au moins deux sources de lumière différentes d'intensité spectrale définie.

8. Appareil de chromatographie en couche mince selon la revendication précédente, dans lequel les sources de lumière et / ou le dispositif d'alimentation et / ou les conducteurs optiques d'émission de lumière sont conçus de telle sorte qu'à partir de deux conducteurs optiques d'émission de lumière qui sont voisins du côté de la plaque à couche mince, de la lumière d'intensité spectrale différente est émise sur la plaque à couche mince.

9. Appareil de chromatographie en couche mince selon la revendication précédente, dans lequel au moins un élément dispersif, en particulier un filtre à arête, un filtre passe-bande ou une lentille de couplage / découplage, est affecté à un ou à plusieurs conducteurs optiques d'émission de lumière pour permettre une influence ciblée de la répartition spectrale de la lumière incidente sur la plaque à couche mince et / ou pour augmenter l'efficacité de l'alimentation.

10. Appareil de chromatographie en couche mince selon une des revendications précédentes avec des conducteurs optiques de réception de lumière disposés en rangées, de préférence au moins 20 encore plus préférablement entre 50 et 100 conducteurs optiques de réception de lumière.

11. Appareil de chromatographie en couche mince selon la revendication précédente, dans lequel sont disposés des conducteurs optiques de réception de lumière pour réception simultanée de lumière transmise et de lumière réémise, en particulier avec au moins une rangée de conducteurs optiques de réception de lumière respectivement au-dessus et en dessous de la plaque à couche mince.

12. Appareil de chromatographie en couche mince selon à une des revendications précédentes, dans lequel les conducteurs optiques d'émission de lumière et de réception de lumière sont disposés respectivement en rangées.

13. Appareil de chromatographie en couche mince selon la revendication 12, dans lequel les conducteurs optiques d'émission de lumière et de réception de lumière forment ensemble une rangée, en particulier avec des fibres en Y se terminant sur la plaque à couche mince, ou avec des conducteurs optiques d'émission de lumière et des conducteurs optiques de réception de lumière disposés alternativement.

14. Appareil de chromatographie en couche mince selon la revendication 12, dans lequel les conducteurs optiques d'émission de lumière et de réception de lumière sont disposés dans des rangées parallèles, en particulier avec une rangée de conducteurs optiques de réception de lumière entre deux rangées de conducteurs optiques d'émission de lumière, et de préférence décalée par rapport à ces dernières et / ou avec des conducteurs optiques d'émission de lumière et de réception de lumière orientés les uns vers les autres et disposés des deux côtés de la plaque à couche mince.

15. Appareil de chromatographie en couche mince selon à la revendication 14, dans lequel une rangée de conducteurs optiques d'émission de lumière est disposée entre deux rangées de conducteurs optiques de réception de lumière et dans lequel l'installation optique d'analyse est configurée de préférence en vue de mesures de fluorescence.

16. Appareil de chromatographie en couche mince selon une des revendications précédentes, dans lequel les conducteurs optiques d'émission de lumière et de réception de lumière possèdent des diamètres différents, le ou les diamètres des conducteurs optiques de réception de lumière étant en particulier plus grands que le ou les diamètres des conducteurs optiques d'émission de lumière.

17. Appareil de chromatographie en couche mince selon une des revendications précédentes avec un dispositif de réglage pour la diminution du nombre des conducteurs optiques utilisés d'émission de lumière et / ou de réception de lumière.

18. Appareil de chromatographie en couche mince selon une des revendications précédentes avec une commande par moteur pas à pas pour le déplacement des conducteurs optiques d'émission de lumière et de réception de lumière, en particulier pour un déplacement commun par rapport à la plaque à couche mince.

19. Appareil de chromatographie en couche mince selon une des revendications précédentes avec un appareil de prise de vue à CCD pour la documentation de l'orientation de la plaque à couche mince.

20. Appareil de chromatographie en couche mince selon une des revendications précédentes avec un moyen pour la détection et / ou pour la compensation de plaques à couche mince dont les faces présentent des défauts de planéité et de parallélisme.
